# FASCICULE DE BREVET EUROPEEN

(11) **EP 1 412 225 B1**
(45) Date de publication et mention de la délivrance du brevet: **18.01.2006**
(21) Numéro de dépôt: 02780916.9
(22) Date de dépôt: 27.06.2002
(51) Int. Cl.: B60R 13/02

(54) **PAVILLON A TISSU A BOUCLES**
DACHHIMMEL MIT SCHLAUFENSTOFF
LOOPED FABRIC ROOF

(30) Priorité: 27.06.2001 FR 0108452
(43) Date de publication de la demande: 28.04.2004
(73) Titulaire: Aplix, 75008 Paris (FR)
(72) Inventeur: BILLARANT, Fabrice, F-44000 Nantes (FR); HAMMER, Pavel, 72116 Mössingen/Oschingen (DE); RAIMBAULT, Louis, F-44240 La Chapelle sur Erdre (FR); WESTEEL, Stéphane, F-59910 Bondues (FR); DELSART, Patrick, F-25960 Deluz (FR)
(74) Mandataire: Eidelsberg, Olivier Nathan
(86) Numéro de dépôt international: PCT/FR2002/002233
(87) Numéro de publication internationale: WO 2003/002377

(56) Documents cités:
- EP-A- 0 813 277
- DE-A- 10 030 078
- DE-U- 29 821 884
- FR-A- 1 515 491
- FR-A- 2 116 704
- US-A- 6 076 238

## Description

La présente invention se rapporte aux véhicules automobiles, par exemple une voiture ou un autobus, ayant une caisse dont au moins une partie de la surface intérieure est recouverte d'une garniture ou d'un habillage.

En général, ces garnitures, par exemple au niveau du pavillon ou toit ou des portes du véhicule sont sous la forme de panneaux en un matériau mousse par exemple une mousse en polyuréthanne.

Actuellement les panneaux de garniture, pour être posés contre la surface intérieure de la caisse du véhicule, doivent être maintenus en place par un robot ou manuellement pour permettre aux opérateurs de les fixer par exemple par l'intermédiaire des poignées de portes, des poignées de maintien latéral en haut de chaque fenêtre, des pare-soleils et autres lampes de plafond, qui en coopération avec des trous dans les panneaux maintiennent les panneaux de garniture contre la caisse à l'état fini du véhicule. Les véhicules automobiles aujourd'hui comportent de plus en plus de systèmes électroniques et par conséquent il devient de plus en plus nécessaire de faire passer les câbles électriques entre la caisse et les panneaux de garniture.

On connaît déjà des câbles ou même des accessoires d'insonorisation qui sont collés directement sur les panneaux de garniture, par exemple au niveau du pavillon ou de la porte, et qui ne peuvent plus ensuite être repositionnés. Par conséquent, on ne peut pas facilement les enlever et les remettre pour entretien ou remplacement.

Dans le document DE 29821884 au nom de Lear, il est décrit un panneau de garniture comportant sur toute sa face tournée vers le pavillon (tournée vers le haut du véhicule) un matériau fibreux à poils destinés à coopérer avec des crochets pour fixer des câbles à cette face.

La fonction du dispositif à crochets et poils y consiste à positionner les câbles sur la face supérieure du panneau, entre celui-ci et le pavillon. Le panneau soi-même est fixé à la caisse par d'autres moyens de fixation, notamment à vis, suffisamment robustes pour maintenir le panneau à la caisse pendant toute la durée de vie de la voiture, et notamment pour supporter les chocs, les coups de frein, etc., sans se détacher.

Ce type de fixation des câbles et du panneau présente l'inconvénient que les câbles ne sont pas fixés au panneau aussi bien que le panneau l'est à la caisse. Ainsi, les câbles ont facilement tendance à se détacher au cours du déplacement du véhicule, par exemple après un choc ou un coup de frein intempestif. De même, lorsque l'on souhaite monter les câbles à l'avance sur le panneau puis transporter le panneau avec câbles prémontés jusqu'au site d'assemblage du panneau à la caisse, il faut prendre des mesures coûteuses pour être sûr que lors du voyage les câbles prémontés sur le panneau ne s'en détachent pas. En outre, lorsque l'on monte les composants sur le panneau, il est nécessaire de maintenir celui-ci avec les bras levés, la résistance au décrochage du panneau avec ses composants de la caisse n'étant pas suffisante tant que le panneau n'a pas été fixé avec des vis.

La présente invention vise à surmonter ces inconvénients en proposant un nouveau type de panneau qui permet d'une part de fixer temporairement le panneau à la caisse avec une force suffisante pour résister au décrochage en raison du poids du pavillon équipé de tout ses composants et par conséquent sans qu'il soit nécessaire de tenir le pavillon avec les bras levés avant de le fixer définitivement à la caisse par, par exemple, des moyens à vis, et d'autre part d'assurer une fixation suffisante des composants au panneau pour résister aux chocs, coup de frein, etc., et ce avec cependant la même facilité d'utilisation que dans les dispositifs de l'art antérieur, et notamment en conservant l'avantage de pouvoir modifier simplement le positionnement de ces composants (câbles, cales, etc.).

Le revêtement par exemple d'un non tissé sur toute la surface du pavillon et son engagement dans des éléments agrippant pré-positionnés sur la structure du véhicule ne rend pas possible, entre autres, le maintien temporaire du pavillon sur ligne d'assemblage comme aide au montage avant fixation définitive. En effet, cette application n'est pas réalisable avec les non-tissés généralement utilisés dans l'automobile. De par la nature même de ces non-tissés, généralement composés de fibres entrelacées ou aiguilletées, la résistance au décrochage perpendiculaire des combinaisons non-tissé/élément agrippant ne peut supporter le poids d'un pavillon équipé de tous ses composants (câbles, plats, de cales d'insonorisation en mousses de différentes densités, d'airbag latéraux et autres composants électroniques).

La plupart des fabricants de pavillons proposent aux constructeurs automobiles des pavillons pré-équipés de tous leurs composants (modules) pour qu'il ne reste plus qu'à les fixer à la caisse du véhicule. Cela sous-entend que la fixation des composants sur le pavillon soit assez forte pour résister aux conditions de transport. A l'inverse d'une combinaison maille/élément agrippant, les résistances mécaniques (Traction - Pelage - Décrochage perpendiculaire) d'un non-tissé/élément agrippant pour fixer les éléments, seraient trop faibles pour maintenir en place tous les composants lors du transport pour les usines JAT.

La présente invention vise à pallier les inconvénients mentionnés ci-dessus en proposant un véhicule dans lequel d'une part les panneaux de garniture, par exemple au niveau du pavillon, peuvent être positionnés facilement et de manière stable en recouvrement de la surface intérieure de la caisse du véhicule et dans lequel d'autre part différents objets qui sont destinés à être disposés entre ce panneau de garniture et la caisse, par exemple des câbles, des circuits imprimés, des câbles plats ou des cales en mousse pour insonoriser l'ensemble du véhicule et empêcher les vibrations du panneau de garniture, peuvent être fixés au panneau de manière simple avec possibilité de repositionnement ultérieur si la première position dans laquelle a été fixé les objets n'est pas la bonne.

Suivant l'invention, le véhicule automobile, ayant une caisse dont au moins une partie de la surface intérieure est recouverte par au moins un panneau de garniture, des objets, tels que des câbles, des circuits imprimés souples, des câbles plats souples ou des cales anti vibration, étant disposés entre le panneau de garniture et la caisse, est caractérisé en ce que ledit au moins un panneau de garniture comporte sur une de ses faces un tissu tricoté ou tricot à boucles, ayant une base et des boucles issues de la base, et il est prévu des parties mâles d'accrochage, notamment des crochets, associés aux objets et/ou à la caisse pour permettre leur fixation audit au moins un panneau, le tricot à boucles recouvrant sensiblement toute la face du panneau.

En munissant ainsi la face du panneau de garniture destinée à venir en regard de la surface intérieure de la caisse d'éléments femelles, par exemple des boucles, on va pouvoir facilement fixer les câbles, les circuits imprimés souples (FPC ou FFC) ou les cales en mousse pour empêcher la vibration en associant ou en fixant ces différents objets par des crochets associés correspondants.

Ainsi, les câbles par exemple seront bien positionnés, c'est-à-dire avec une grande résistance à l'arrachement, avec possibilité de modifier leur position. Il en sera de même pour les cales d'amortissement des vibrations. En outre, en munissant également des structures métalliques de la caisse d'éléments à crochets, on va pouvoir positionner facilement le panneau de garniture sur la caisse pendant l'installation par exemple des poignées, du pare-soleil ou des lampes de plafond sans avoir à tenir le panneau par l'intermédiaire d'un robot ou d'un opérateur comme c'est le cas actuellement.

A titre indicatif, le tableau ci-dessous reproduit des résultats de tests effectués suivant la norme NF G91-103 avec des champignons mâles APLIX 224 disponibles auprès de la société APLIX SA, France, et d'une part une maille à boucles APLIX 035 également disponible auprès de la société APLIX SA , France, et d'autre part un non tissé NOL-FRA 41 disponible auprès de la société Nolar Industrie, Canada. qui permettent d'évaluer les différences de performance :

| En combinaison avec Champignons APLIX 224 | Traction | Pelage | Décrochage Perpendiculaire |
|---|---|---|---|
| Maille à boucles APLIX 035 35 gr/m² | 7,82 N/cm² | 1,23 N/cm | 5,08 N/cm² |
| Non tissé 50 gr/m² | 1,44 N/cm² | 0,35 N/cm | 1,67 N/cm² |

Suivant un mode de réalisation particulièrement préféré de l'invention, la face du panneau de garniture destinée à venir en regard de la surface intérieure de la caisse est recouverte d'un tissu tricoté ou tricot à boucles appliqué sur le panneau de garniture par exemple par contre-collage, surmoulage, foamage, ou tout autre procédé connu de lamination.

Suivant un mode de réalisation préféré de l'invention, le tricot à boucles a un poids compris entre 20 g/m² et 200 g/m², de préférence entre 30 et 50 g/m².

Suivant un mode de réalisation préféré, particulièrement simple à fabriquer et robuste, le tricot à boucles comporte une base constituée d'un entrelacement de fils de trame et de fils de chaînette (ou colonne de maille) et des boucles issues de la base, en particulier réalisé à partir d'un métier à tisser à trois barres.

En particulier les tricots à boucles utilisés dans les couches-culottes au niveau des fermetures à la taille sont particulièrement bien adaptés pour cette application.

On entend dans la présente invention par "des boucles sur sensiblement toute la surface" que la surface en question ne comporte pas de zone sans boucle, une zone sans boucle étant une zone de laquelle ne sont pas issues de pieds de boucles et qui s'étend sur une distance sensiblement supérieure à une distance habituelle, dans le domaine des boucles d'auto-agrippant, entre deux pieds de boucles consécutives, la zone entre ces deux pieds de boucles ne pouvant alors pas être considérée comme une zone sans boucle. En particulier, on peut dire qu'une zone sans b boucle est une zone ayant une surface supérieure au cm² et n'ayant pas de pieds de boucle.

Suivant un perfectionnement de l'invention, le véhicule comporte au moins un câble plat souple ayant un substrat de base respectif sur lequel sont déposés des circuits électriques, notamment par gravure ou impression ; et sur au moins une des faces du substrat, de préférence sur chaque face du substrat, il est fixée, notamment collée, une bande de laquelle sont issus des éléments d'accrochage.

On peut ainsi fixer d'un côté le câble souple à une face du panneau d'habillage et d'autre part empiler les câbles souples les uns sur les autres, ce qui permet de gagner de la place, de changer facilement un câble défectueux de l'empilement et d'installer facilement les câbles au bon endroit.

Il est décrit maintenant un mode de réalisation de l'invention donné uniquement à titre d'exemple en se reportant au dessin.
La figure 1 représente un véhicule au niveau du pavillon suivant une vue en coupe transversale, différents éléments se trouvant entre la face supérieure du panneau et la caisse d'un véhicule automobile ;

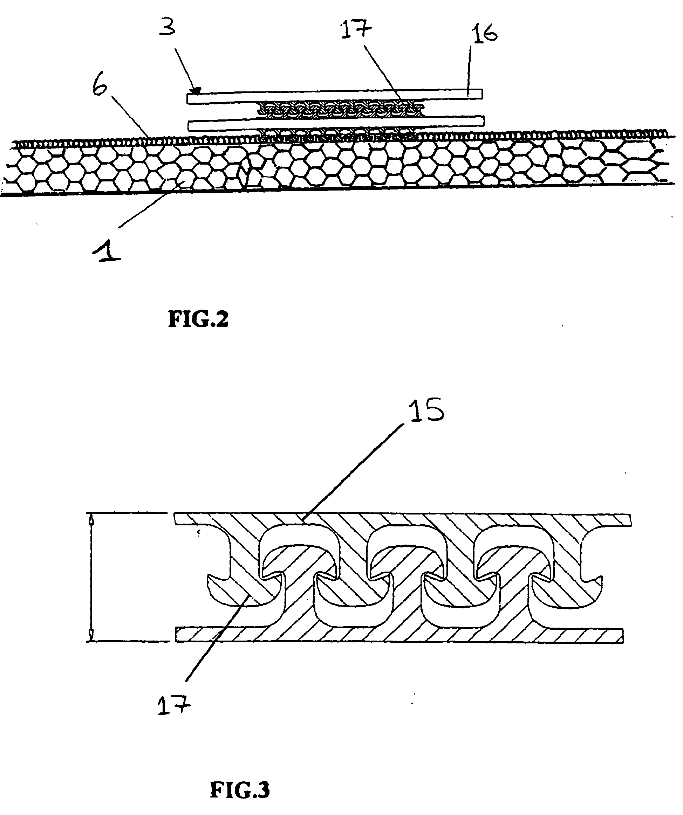

La figure 2 représente une vue à plus grande échelle en coupe transversale d'une partie de la figure 1 ; et
La figure 3 est une vue à plus grande échelle des bandes à crochets fixées aux substrats de l'assemblage formant câble souple.

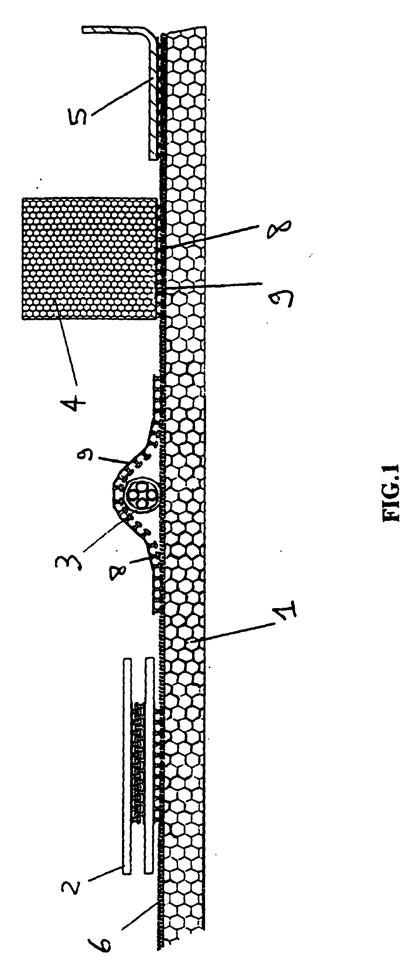

La figure 1 représente une partie d'un panneau 1 en un matériau mousse par exemple une mousse en polyuréthanne (PUR). Ce panneau est destiné à être interposé entre la surface intérieure du toit ou pavillon de la caisse (non représentée à la figure) d'un véhicule automobile et le conducteur. Sur la face inférieure (à la figure) du panneau on peut prévoir un velour ou autre tissu destiné à donner un caractère esthétique à l'ensemble, ce velours consistant en l'intérieur du véhicule tel qu'il est vu par le conducteur.

Entre la caisse de l'automobile et ce panneau 1, il est prévu de faire passer un ou plusieurs câbles électriques 3, un ou plusieurs circuits imprimés souples (FPC) 2, un ou plusieurs câbles plats souples (FFC) ainsi qu'une ou plusieurs cales 4, également en mousse, servant à amortir les vibrations du panneau par rapport à la caisse. La surface supérieure, ou en regard de la caisse, du panneau 1 comporte un tissu 6 à boucles. Le tissu 6 à boucles est un tissu tricoté à trois barres comportant des fils de trame, des colonnes de mailles et des boucles tricotées dans l'entrelacement de fils de trame et de colonnes de mailles. Le tissu tricoté peut être par exemple en polyamide, polyester, polypropylène. Il peut être équipé d'un support de type film papier non tissé, film adhésif, notamment d'une épaisseur comprise entre 20 et 100 *µ*. Le poids du tissu est compris entre 20 g/m² et 200 g/m², de préférence entre 30 et 50 g/m² . Les fils, et notamment les fils de boucle, ont un denier compris entre 40 dtx/10 brins et 78 dtx/20 brins. Le tissu à boucles 6 est contrecollé sur la face supérieure du panneau 1. On pourrait également réaliser la fixation de ce tissu à boucles sur le panneau par surmoulage, foamage ou tout autre procédé connu en soi de lamination.

La caisse de l'automobile comporte par exemple des structures 5 métalliques sur lesquelles est fixée une bande 9 comportant des éléments mâles, ici des crochets 8 en forme de champignons, qui vont coopérer avec les boucles du tissu à boucles. La bande 9 à crochets 8 est collée sur une ou plusieurs structures métalliques 5 de la caisse. Ainsi, lorsque l'on applique le panneau 1 sur la caisse on peut le maintenir fixé à la caisse et installer les poignées, pare-soleils et lampes de plafond sans avoir à tenir à la main ou par robot le panneau contre la caisse. En outre, si dans un premier temps le panneau a été mal positionné par rapport à la caisse et par rapport aux emplacements prévus pour la lampe de plafond, les pare-soleils ou les poignées, on peut repositionner facilement ce panneau en le retirant et en le repositionnant par l'intermédiaire des boucles et des crochets. On a donc un système plus précis de positionnement que dans le cas d'une tenue manuelle et un système plus simple que dans le cas d'un robot.

La ou les cales 4 d'amortissement des vibrations comportent également sur une de leurs faces une bande 9 à crochets 8 similaire à celle déposée sur la structure métallique de la caisse pour également fixer ces cales 4 au panneau 1.

De même il est prévu une bande 9 à crochets 8 pour fixer le câble ou les câbles 3 au panneau 1. On peut, par exemple comme on le voit à la figure, prévoir une bande 9 à crochets de grande dimension par rapport à la dimension transversale du câble 3 de manière à prendre en sandwich le câble 3 entre le panneau 1 et la bande 9 à crochets 8, les parties latérales de la bande étant fixées aux boucles du panneau 1 tandis que la partie centrale recouvre le ou les câbles 3 et les maintiennent contre le panneau 1. On pourrait également prévoir d'enrober les câbles 3 directement d'une bande à crochets et de fixer ces câbles au pavillon par l'intermédiaire des crochets de la bande enroulée autour du câble.

Les circuits imprimés souples (FPC pour flexible printed circuit) 2 ou les câbles plats souples (FFC pour Flexible Flat Circuit) comportent sur une ou plusieurs de leurs faces des bandes à crochets. Ces bandes à crochets sont simplement comme dans le cas de la cale 4 ou de la structure métallique 5 collées à la surface du circuit imprimé de manière très classique. On peut ainsi fixer le circuit imprimé par l'intermédiaire d'une bande à crochets sur le panneau 1. De même, comme on le voit à la figure, on peut empiler les circuits imprimés les uns sur les autres en faisant s'encliqueter les uns dans les autres les crochets de bandes à crochets se faisant face de deux circuits imprimés souples disposés l'un sur l'autre.

Le câble 3 souple (FPC ou FFC) est constitué d'un substrat 16 plan sur lequel les circuits électriques sont imprimés ou gravés dans un matériau plastique classique dans le domaine, les circuits intégrés ou électriques étant noyés dans le plastique du câble. Sur au moins l'une des faces du substrat 16 et de préférence sur chacune des faces du substrat 16, il est fixé, par exemple par une colle classique, une bande 15 à crochets 17. Les crochets 17 peuvent prendre tout type de forme, notamment crochets, champignons, etc. bien connu dans le domaine des auto-agrippants. La ou les bandes 15 à crochets 17 sont en matériau plastique et formées par extrusion et étirement comme il est bien connu. On connaît par exemple des crochets de ce genre dans le domaine des couches-culottes pour le système de fermeture des couches-culottes. Elles peuvent être en PT, PE, PVC, PA, ou matériau plastique similaire. De préférence, la hauteur totale de la bande à crochets est comprise entre 0,3 mm et 1,5 mm, de préférence entre 0,5 mm et 0,9 mm, l'épaisseur de la bande de base n'étant pas supérieure à 0,5 mm. L'épaisseur des crochets ou harpons est comprise entre 0,15 mm et 0,45 mm, de préférence 0,3 mm. La largeur des crochets ou harpons est comprise entre 0,3 mm et 1,2 mm, de préférence 0,6 mm.

La bande à crochets peut être réaliser par exemple avec des crochets de type harpons, extrudés ou moulés, en matière plastique, par exemple en polypropylène ayant une densité comprise entre 50 et 300/cm², notamment des bandes à crochets telles que celles utilisées dans des dispositifs de fermeture de couches-culottes au niveau de la taille.

## Revendications

1. Véhicule automobile, ayant une caisse dont au moins une partie de la surface intérieure est recouverte par un panneau (1) de garniture, des objets (3,4,5), tels que des câbles, des circuits imprimés souples, des câbles plats souples ou des cales anti vibration étant disposés entre le panneau (1) de garniture et la caisse, où il est prévu des parties mâles d'accrochage, notamment des crochets (8), associés aux objets et/ou à la caisse pour permettre leur fixation audit panneau, et **caractérisé en ce que** le panneau (1) de garniture comporte sur une de ses faces un tricot à boucles, ayant une base et des boucles issues de la base, et **en ce que** le tricot à boucles recouvre sensiblement toute la face du panneau.

2. Véhicule suivant la revendication 1, **caractérisé en ce que** le tricot est réalisé sur un métier à trois barres.

3. Véhicule suivant la revendication 1, **caractérisé en ce que** le tissu tricoté a un poids compris entre 20 g/m² et 200 g/m², de préférence entre 30 g/m² et 50 g/m².

4. Véhicule suivant l'une des revendications précédentes, **caractérisée en ce que** la base est constituée d'un entrelacement de fils de chaîne et de fils de trame.

5. Véhicule suivant l'une des revendications précédentes, **caractérisé en ce que** les parties mâles d'accrochage sont sous la forme de bandes dont sont issus des éléments d'accrochage, par exemple des crochets ou des champignons, répartis de manière régulière à la surface de la bande, notamment en rangées et colonnes.

6. Véhicule suivant la revendication 4, **caractérisé en ce que** les crochets, harpons ou champignons sont répartis régulièrement, à raison de 50 à 300/cm².

7. Véhicule suivant l'une des revendications précédentes, **caractérisé en ce que** les crochets, harpons ou champignons sont réalisés par extrusion.

8. véhicule suivant l'une des revendications précédentes, comportant au moins un câble plat souple ayant un substrat de base respectif sur lequel sont déposés des circuits électriques, notamment par gravure ou impression, **caractérisé en ce que** sur au moins une des faces du substrat, et de préférence sur chaque face du substrat, il est fixée, notamment colée, une bande de laquelle sont issus des éléments d'accrochage.

9. Véhicule suivant la revendication 7, **caractérisé en ce qu'**il est prévu au moins deux câbles plats superposés l'un à l'autre par encliquetage d'éléments d'accrochages de l'un des câbles dans des éléments d'accrochage de l'autre câble.

## Patentansprüche

1. Kraftfahrzeug mit einem Gehäuse, von dem mindestens ein Teil der Innenfläche von einer Überzugsplatte (1) von Gegenständen (3,4,5), wie z.B. Kabeln, elastischen gedruckten Schaltungen, elastischen Flachkabeln oder Antivibrationseinlagen, die zwischen die Überzugsplatte (1) und das Gehäuse eingefügt sind, bedeckt ist, wobei männliche Einhakteile, insbesondere Haken (8) vorgesehen sind, die den Gegenständen und/oder dem Gehäuse zugeordnet sind, um ihre Befestigung an der Platte zu ermöglichen, und **dadurch gekennzeichnet, dass** die Überzugsplatte (1) auf einer ihrer Seiten ein Schlingengewebe mit einer Basis und mit aus der Basis vorstehenden Schlingen umfasst, und dass das Schlingengewebe im wesentlichen die gesamte Plattenfläche bedeckt.

2. Fahrzeug nach Anspruch 1, **dadurch gekennzeichnet, dass** das Gewebe auf einem Webstuhl mit drei Stäben hergestellt ist.

3. Fahrzeug nach Anspruch 1, **dadurch gekennzeichnet, dass** das gewirkte bzw. gestrickte Gewebe ein Gewicht aufweist, das zwischen 20 g/m² und 200 g/m², vorzugsweise zwischen 30 g/m² und 50 g/m² liegt.

4. Fahrzeug nach einem der vorangehenden Ansprüche, **dadurch gekennzeichnet, dass** die Basis aus einer Verschlingung von Kettfäden und Schussfäden gebildet ist.

5. Fahrzeug nach einem der vorangehenden Ansprüche, **dadurch gekennzeichnet, dass** die männlichen Einhakteile die Form von Bändern aufweisen, aus denen die Einhakelemente, beispielsweise Haken oder Pilzköpfe, die auf gleichmäßige Art und Weise auf der Oberfläche des Bandes in Längs- und Querreihen verteilt sind, vorstehen.

6. Fahrzeug nach Anspruch 4, **dadurch gekennzeichnet, dass** die Haken, Widerhaken oder Pilzköpfe regelmäßig im Verhältnis von 50 bis 300/cm² verteilt sind.

7. Fahrzeug nach einem der vorangehenden Ansprüche, **dadurch gekennzeichnet, dass** die Haken, Widerhaken oder Pilzköpfe durch Extrusion hergestellt sind.

8. Fahrzeug nach einem der vorangehenden Ansprüche, mit mindestens einem elastischen Flachkabel mit einem jeweiligen Basisträger, auf dem elektrische Schaltungen, insbesondere durch Ätzen oder Druck, aufgebracht sind, **dadurch gekennzeichnet, dass** auf mindestens einer der Flächen des Trägers und vorzugsweise auf jeder Fläche des Trägers ein Band befestigt, insbesondere geklebt ist, aus dem Einhakelemente hervorstehen.

9. Fahrzeug nach Anspruch 7, **dadurch gekennzeichnet, dass** mindestens zwei Flachkabel vorgesehen sind, die durch Einrasten von Einhakelementen eines der Kabel in Einhakelemente des anderen Kabels übereinander angeordnet sind.

## Claims

1. Automobile vehicle having a body, of which at least a part of the inner surface is covered by a covering panel (1), objects (3, 4, 5) such as cables, flexible printed circuits, flexible flat cables or anti-vibration blocks being disposed between the covering panel (1) and the body, wherein male hooking parts, in particular hooks (8), are provided, associated with the objects and/or with the body in order to permit them to be fixed to the said panel, and **characterised in that** the covering panel (1) has on one of its faces a looped knitted fabric having a base and loops issuing from the base and the looped knitted fabric covers substantially the whole face of the panel.

2. Vehicle as claimed in claim 1, **characterised in that** the knitted fabric being produced in particular on a three-bar loom.

3. Vehicle as claimed in claim 1, **characterised in that** the knitted fabric has a weight between 20 g/m² and 200 g/m², preferably between 30 g/m² and 50 g/m².

4. Vehicle as claimed in any one of the preceding claims, **characterised in that** the base is formed by interlacing of weft threads and chain-stitched threads.

5. Vehicle as claimed in any one of the preceding claims, **characterised in that** the male hooking parts are in the form of strips, from which hooking elements issue, for example hooks or mushroom-heads, distributed uniformly on the surface of the strip, in particular in rows and columns.

6. Vehicle as claimed in claim 4, **characterised in that** the hooks, spears or mushroom-heads are uniformly distributed at a spacing of 50 to 300/cm².

7. Vehicle as claimed in any one of the preceding claims, **characterised in that** the hooks, spears or mushroom-heads are produced by extrusion.

8. Vehicle as claimed in any one of the preceding claims, having at least one flexible flat cable having a respective base substrate on which are disposed electrical circuits, in particular by etching or printing, **characterised in that** on at least one of the faces of the substrate, preferably on each face of the substrate, a strip, from which hooking elements issue, is fixed, in particular glued.

9. Vehicle as claimed in claim 7, **characterised in that** at least two flat cables are provided superimposed one on top of the other by the latching of hooking elements of one of the cables into the hooking elements of the other cable.
